# EUROPEAN PATENT SPECIFICATION

(11) **EP 1 223 800 B1**
(45) Date of publication and mention of the grant of the patent: **14.07.2004**
(21) Application number: 00975102.5
(22) Date of filing: 25.10.2000
(51) Int. Cl.: A01J 5/017, A01K 1/12

(54) **MEANS FOR IMPROVED MILKING**
VORRICHTUNG ZUM VERBESSERTEN AUSMELKEN
DISPOSITIF AMELIORANT LA TRAITE

(30) Priority: 26.10.1999 SE 9903857
(43) Date of publication of application: 24.07.2002
(73) Proprietor: DeLaval Holding AB, 147 21 Tumba (SE)
(72) Inventor: FORSEN, Gösta, S-146 38 Tullinge (SE)
(74) Representative: Platt, Timothy Nathaniel
(86) International application number: PCT/SE2000/002078
(87) International publication number: WO 2001/030134

(56) References cited:
- EP-A1- 0 774 204
- EP-A1- 0 789 995
- WO-A1-92/06588
- WO-A1-94/23565
- WO-A1-99/27770

## Description

### TECHNICAL FIELD OF THE INVENTION

The present invention relates to a guide means for guiding the milk tubes used for automatic milking of dairy animals.

### BACKGROUND OF THE INVENTION

Continuous efforts are being made in order to reduce the costs of producing milk. One way of doing this is by automating the milking of dairy animals thereby reducing the labour costs of producing milk. Milking robots are being developed which can identify the teats of the animal to be milked and which can attach milk cups to the teats of the animal. In a milking apparatus known from patent document WO90/07268 the robot arm attaches each teat cup in turn of the teats of the animal. After the teats have been attached the robot arm moves into a position away from the udder to prevent it being kicked and the milk tubes from the teat cups run freely between the front pair of legs and the rear pair of legs of the animal to the milk collecting reservoir which is normally positioned to one side of the animal. There is a nsk that the animal being milked will become entangled with the milk tubes or kick or stand on the milk tubes which could cause one or more teat cups to be pulled off the teats.

Further in SE 9803011-7 (PCT SE99/01529), which are pending applications filed by the applicant of the present application, a tube guide means for restricting the movements of tubes in a milking robot has been described, which is arranged to guide the milk tubes into a position where they are less susceptible to being touched by the animal being milked. These means are in the form of a projection mounted at or near the end of the robot arm. The Projection extends m the longitudinal direction of the robot arm and has one or more contact surfaces which are intended to be in contact with the milk tubes and which retain the milk tubes in a desired position with respect to the animal being milked. The projection can project across the width of the animal and can be used to pull the milk tubes to a position at a distance from the rear legs of the animal.

By restraining the milked tubes in a desired position at a distance from the ticklish rear leg region of the animal, the risk that the animal is tickled by movements of the tubes is reduced and there is less chance that the tubes will be kicked and pulled off the teats.

However, the path of extension of the milk tubes leading from the teat cups to the receptacle of the milking robot are influenced by the movements of the animal and the udder shape, e.g. the actual position level of each teat. These facts will effect the attitudinal orientation of the teat cups, which may cause deterioration in the milking sequence.

Therefore, if an animal is allowed to change its position in the milking station, especially during or after attachment of the teat cups, said desired position must be altered correspondingly.

### SUMMARY OF THE INVENTION

The object of the invention is to solve the above stated problems.

The present invention solves the above stated problems by means of a device having the features mentioned in the characterising part of claim 1. Further improvements to the present invention can be found in devices having the features mentioned in the characterising parts of the dependent claims. While the invention will be illustrated by means of examples in which it is mentioned that milk tubes, depending on circumstances, are restrained in alternative positions by the guide means, the invention is also applicable to all other flexible tubes, lines, cables or the like used in a milking apparatus. For the sake of brevity the words tubes and tubing will be used in the following to cover all such flexible components such as, but not limited to, vacuum tubes for supplying air at an under-pressure, cleaning fluid tubes, electrical cables, compressed air tubes and hydraulic tubes.

In a device in accordance with the present invention, the robot arm in a milking apparatus is associated with an "animal following means", which is arranged to guide the milk tubes into the desired position relative to an animal, no matter if the animal changes its position in the milking stall. For this purpose the robot arm is controlled by means of a sensing device, which is arranged to generate signals corresponding to the movements of the animal relative to said milking station. The signals will be fed to the control unit of the milking robot, which in turn will manoeuvre the robot arm correspondingly to the signals in order to cause the tube guide means to follow the movements of the animal.

In a second embodiment the sensing device is arranged to generate signals, which indicate the position of an optional or predetermined region at the hindquarter of the animal.

In a further embodiment the sensing device comprises a manure plate, a bottom end of which being pivotally linked to a frame of the milking station. A top end of which being arranged to rest against the appropriate region at the hindquarter of the animal and a sensor being arranged to indicate the movements of the manure plate in relation to said frame.

Advantageously, the positioning device comprises a manger device, which is controlled by means of a transponder reader and arranged to encourage the animal to seek for a feeding position, in which the udder will be in a proper position for teat cup attachment and milking.

Preferably, the manger device is movable from a start position, in which no feeding takes place, to one of four possible feeding positions.

Suitably, each of the four feeding positions corresponds to a specific category of animals.

Advantageously, the animals in each category are of essentially the same length.

Preferably, the animals in a first category are longer than the animals in a second category, the animals in the second category are longer than the animals in a third category and the animals in the third category are longer than the animals in a fourth category.

In a further embodiment the sensor is a doppler-radar-type sensor or a laser-type sensor.

In a preferred embodiment the sensor is a geometric-type sensor or an angle indicator.

The invention will be described in more detail in the following by means of examples of embodiments and figures.

### DRAWING SUMMARY

Fig. 1 is a schematic view of the main components of one embodiment of a milking station provided with a sensing device comprising a manure plate and a manger in accordance with the invention in a rest position.

Fig. 2 shows a view of the milking station in Fig. 1 with the manger in a first position.

Fig. 3 discloses the milking station in Fig. 1 with the manger in one of its second to fourth positions.

Fig. 4 and 5 are schematic, partly cu out views of the milking station, which disclose a manure plate used to influence on the movements of the robot arm and tube guide means for two different positions of an animal.

### DETAILED DESCRIPTION

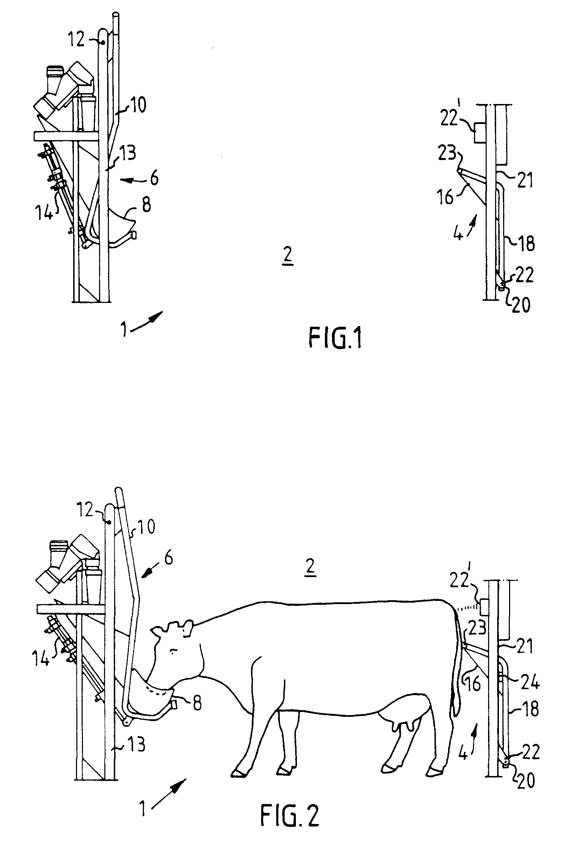

Fig. 1 shows schematically one embodiment of a milking station 1 provided with a positioning means 2 in accordance with the invention in a start position. A sensing device 4 and a feeding device 6 may be provided at a respective end of the frame of the milking station 1. A photocell (not shown) located on the upper frame of the milking stations is arranged to detect the presence of an animal in the milking station. The feeding device 6 includes a manger 8, which by means of a manger support arm 10 may be pivotally supported 12 at the upper frame of the front end 13 of the milking station. The manger is provided with feed dispensers known per se and a manoeuvring means 14, e.g. comprising hydraulic- or pneumatic cylinders, electric linear motors or electrically or otherwise driven gearing. Consequently, the manager 8 is movable for lengthways adaptation of the station 1 by predefined positions based on animal identification (not shown transponder and transponder reader) and is controlled by means of the control unit (not shown) of the milking robot. Experiments have revealed that, as a rule, cows may be classified to individual length and behaviour (pattern of movements) in four categories. The animals/cows in a first category are the longest, they decrease in length from the first to the second, third and fourth categories. The cows in the fourth category are the shortest. Therefore, said predefined positions include a start position and at least four feeding positions. In fig. 1 the manger 8 is in its start position.

The sensing device 4 may be provided with a splash guard or manure plate or a combination 16 including a plate support arm 18, the bottom end of which may be pivotally supported 20 at the lower frame of the rear end 21 of the milking station 1. The pivotable manure plate 16 is provided with a (not shown) spring means of a conventional type, e. g. an elastic element, a compression spring, a tension spring or similar and preferably a torsion spring, which is enclosed in the bottom end of the plate support arm 18. Said spring means, with a light pressure urges the manure plate 16 in direction of the front end 13 of the milking station 1.

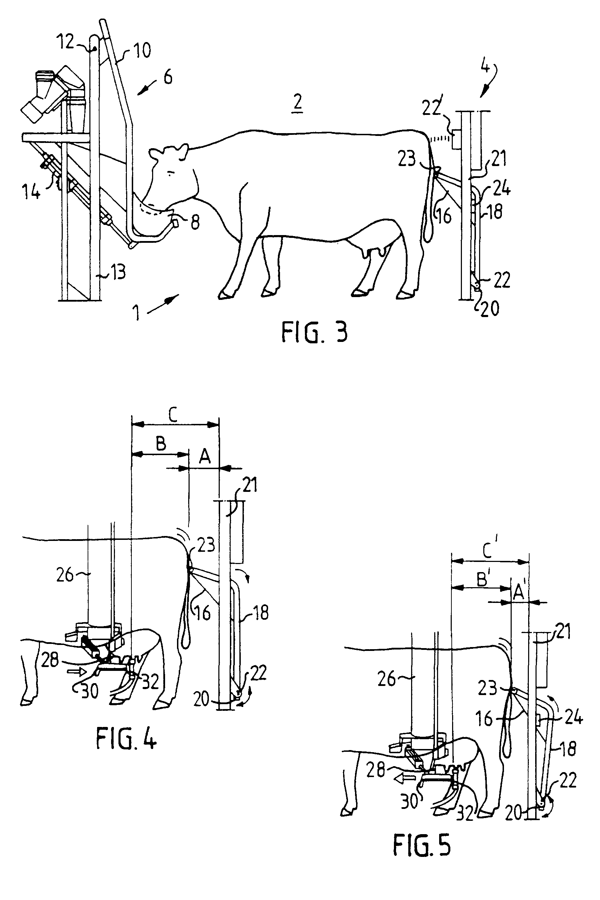

A rounded top edge 23 of the manure plate 16 and the plate support arm 18 is intended to rest, with said light pressure, against the hindquarter of an animal during a milking sequence. Advantageously, the top edge 23 is movable between a start position and a position in which the top edge is flush with the frame of the rear end 21 of the milking station 1. (Cf. figs. 4 and 5) In fig. 1 the manure plate 16 is in its start position. i. e. the top edge 23 is in its furthest position in relation to the rear end 21 of the milking station 1. The manure plate 16 is maintained in its start position by a stop means 24 on the frame of the rear-end 21, which stop means 24 is arranged to bear on the manure plate 16 or plate support arm 18.

Further, the sensing device 4 may include a conventional geometric-type sensor 22 or an angle indicator, which works with electric resistance or piezo-effect or other known effects and which preferably is enclosed in the support arm 18, close to the pivot support 20 (sensor 22 not shown in detail). Alternatively a Doppler radar or laser-type sensor 22' may be attached to the upper frame of the rear end 21 of the station 1. The sensor 22 is arranged to generate signals depending on the current position of the manure plate 16, and thereby the current position of a selected region at the hindquarter of an animal. Alternatively the sensor 22' may indicate differences in distance between said selected region and the frame of the rear end 21. Signals generated by means of the sensor 22, (22') may be fed to the control unit of the milking robot and the manger 8 correspondingly moved.

Hence, the sensing device 4 may be used for lengthways sensing of the position of an animal during a milking sequence and for preventing contamination of the milking equipment with urine and manure during milking.

Fig. 2 shows schematically the embodiment in fig. 1, when an animal, in this case a long cow, has entered the milking station 1. Her presence has been detected by the photocell, the entry gate (not shown) has been closed and she has been identified by means of a rod reader and transponder (not shown). The manger 8 has been brought into a first position for feeding.

The positioning means 2 is adapted to the common lengths of cows. Therefore, as the manger 8 is in its first, most forward position for feeding, the top edge 23 of the manure plate 16 is resting with a light pressure against the hindquarter of the cow, the manure plate 16 still being in or close to its start position. In this position the sensor 22 (22') confirms that the udder of the cow is in the proper situation for teat cup attachment and milking. Of course, the manure plate 16 also leads manure and urine away from the space between the front end 13 and the rear end 21 of the milking station. The attributes of the manure plate will be described in more detail later.

Fig. 3 discloses schematically the embodiment in fig. 1, when an animal, in this case a short cow, has entered the milking station 1. As in fig. 2 her presence has been detected by the photocell, the entry gate (not shown) has been closed and the rod reader (not shown) has identified her. In this case. the new identification data associated with this cow has called for a different position of the manger 8.

As the animal is a short cow the manger 8 is no longer in its first, most forward position for feeding. Instead, the manger 8 is in another one of the four possible positions for feeding. However, even in this case the top edge 23 of the manure plate 16 is still resting with a light pressure against the hindquarter of the cow while the manure plate 16 still being in or close to its start position. Again, in this position the sensor 22 (22') confirms that the udder of the cow is in the proper situation for teat cup attachment and milking.

This is due to the fact that, generally speaking, the udder is located in approximately the same distance from the hindquarter of a cow, no matter how long the cow is.

Therefore, as the sensing device 4 is arranged to measure a distance (A) between a selected region at the hindquarter of the cow and the rear end 21 of the milking station 1, the length of the cow does not have any major influence on robot arm positioning. Instead, the movable manger 8 compensates for differences in length of the cows.

Fig. 4 and fig. 5 disclose two different positions of the manure plate 16 for two corresponding positions of the hindquarter of a cow. A robot arm bracket 26 is attached to a (not shown) frame of the milking station. Robot arm 28 is attached to the bracket and is pivotable in a horizontal plane by actuator means, which can be pneumatic or other suitable actuator. The robot arm 28 has a tube guide means 30 for guiding the milk tubes and a gripping means 32 for fetching a teat cup for attachment. The attributes of the robot arm 28, tube guide means 30 and gripping means 32 have been discussed in detail in the applicants previously filed application SE 9803011-7 (PCT SE99/01529), which is cited in the introductory part of the description. and are therefore not described further here The figures 4 and 5 illustrate the start up of a milking sequence, the gripping means 32 of the robot arm 28 has fetched the first teat cup, moved to the start position for the first teat and is about to attach the cup to the teat. During a milking sequence and especially during cup attachment it is essential that the teat cups be aligned with the respective teat in order to increase reliability.

In fig. 4, in conformity with fig. 3, the top edge 23 of the manure plate 16 is resting with a light pressure against the hindquarter of the cow and the manure plate is in or close to its start position. In this position a distance A is measured between the region at the hindquarter of the cow, on which the manure plate 16 is resting, and the frame of the rear end 21 of the milking station. For this specific cow a distance B is measured between said region and the gripping means 32 (identification data). A+B equals C, which is the distance between the gripping means 32 and the frame of the rear end 21. The sensor 22 is calibrated to approve to the distance A as accepted to commence and accomplish a milking sequence and confirms to the control unit. Therefore, there is no call for any adjustment of the positions of the robot arm 28, tube guide means 30 and gripping means 32, i. e. the distance C is maintained.

In fig. 5 the manure plate 16 has been moved to a different position in that the cow has stepped backwards and consequently its hindquarter has been moved closer to the frame of the rear end 21. In this position a distance A' is measured between the region at the hindquarter of the cow, on which the manure plate 16 is resting, and the frame of the rear end 21 of the milking station. As the distance A' differs from A (shorter), the sensor 22 generates signals to the control unit, which call for a corresponding adjustment of the positions of the robot arm 28, tube guide means 30 and gripping means 32, in order to maintain the distance C' equal to distance C.

This adjustment will also influence a distance B' measured between said region at the hindquarter of the cow and the gripping means 32, even after the cow has moved, to maintain substantially the same as the distance B before the cow moved.

Hence, it is possible to have the robot arm 28, tube guide means 30 and gripping means 32 follow the lengthways movements of the cow in the milking station 1. Hereby it is ensured that she will not step on or be entangled by the milk tubes during these movements. Neither will the teat cups be brought into attitudes that are disadvantageous to the reliability of the milking sequence.

### OPERATION

When the milking station 1 is waiting for a cow to enter, the manger 8 and the manure plate 16 are in their respective start positions (fig. 1). The manger is empty and the feed dispensers are waiting for a start signal from the control unit of the milking robot.

As soon as a cow enters the station through a previously known entry gate, she will be detected by the photocell. The entry gate will then close. When the cow reaches her head out towards the manger 8, her transponder comes within range of the rod reader. The cow will be identified. If she has permission to be milked, the following sequence will commence.
The manger support arm 10 with the manger 8, depending on her identification data, will pivot towards the cow into one of the possible feeding positions. This will encourage the cow to adjust her position accordingly and thereby her udder will be brought into a proper position for teat cup attachment (Fig. 2 and 3). The feed dispensers will start to portion out forage, fodder or feed etc.

Now with reference to fig. 4, the robot the gripping means 32 of the robot arm 28 has fetched the first teat cup , moved to the start position for the first teat and is about to attach the cup to the teat. The manure plate 16, which is in its start position, is resting against the hindquarter of the cow and will thus follow the movements of the cow, from the start position to any other position within the limits set by the milking station. The sensor 22 indicates to the control unit that the udder is in its appropriate position and the teat cup attachment is allowed to proceed.

With reference to fig. 5, if the cow moves (steps back), the manure plate 16 will be brought to a different position and the sensor 22 will indicate the movement to the control unit, which in turn controls the robot arm 28 to adjust its position accordingly. Therefore, if the cow moves lengthways in the milking station, the robot arm 28 including tube guiding means 30 and gripping means 32 will be able to follow the movements of the cow. This can be achieved during teat cup attachment for all teats of the udder and during the complete milking sequence as well.

As soon as the milking sequence including aftertreatment is completed, the feed dispensing will cease and the manger 8 will return to its start position. The exit gate will be opened, the cow will leave the milking station and the manure plate will be set free to return to its start position. Now the milking station is ready for the next cow to be milked.

If the cow has no permission to be milked (identification data), the manger 8 will not be moved from its start position and no feed will be given. In stead, the exit gate of the milking station will be opened and the cow will leave the station.

## Claims

1. A positioning means (2) for a milking station (1) for milking a lactating animal by means of a robot means (28), said positioning means (2) being provided with a sensing device (4), which is arranged to generate signals corresponding to the movements of the animal relative to said milking station (1), the robot means (28) being responsive to said signals in order to follow said movements of the animal, **characterised in that** the positioning means (2) comprises a manger device (6), which is controlled by means of a transponder reader and movable from a start position, in which no feeding takes place, to one of at least four possible feeding positions to encourage the animal to seek for a feeding position, in which the udder will be in a proper position for teat cup attachment and milking.

2. A positioning means according to claim 1, **characterised in that** the sensing device (4) is arranged to generate signals, which indicate the position of an optional region at the hindquarter of the animal.

3. A positioning means according to claim 1, **characterised in that** the sensing device (4) is arranged to generate signals, which indicate the position of a predetermined region at the hindquarter of the animal.

4. A positioning means according to one of claims 2 or 3, **characterised in that** the sensing device (4) comprises a manure plate (16), a bottom end (20) of which being pivotally linked to a frame (21) of the milking station, a top end (23) of which being arranged to rest against the appropriate region at the hindquarter of the animal and a sensor (22, 22') being arranged to indicate the movements of the manure plate in relation to said frame.

5. A positioning means according to one of the previous claims, **characterised in that** each of the possible feeding positions corresponds to animals classified in a specific category of animals.

6. A positioning means according to claim 5, **characterised in that** each specific category of animals comprises animals of essentially the same length.

7. A positioning means according to claim 5, **characterised in that** the animals in a first category are longer than the animals in a second category.

8. A positioning means according to claim 7, **characterised in that** the animals in the second category are longer than the animals in a third category.

9. A positioning means according to claim 8, **characterised in that** the animals in the third category are longer than the animals in a fourth category.

10. A positioning means according to one of claims 4-9. **characterised in that** the sensor is a doppler-radar-type sensor (22').

11. A positioning means according to one of claims 4-9, **characterised in that** the sensor is a geometric-type sensor (22).

12. A positioning means according to one of claims 4-9, **characterised in that** the sensor is an angle indicator (22).

13. A positioning means according to one of claims 4-9, **characterised in that** the sensor is a laser-type sensor (22').

14. A milking station (1) for milking a lactating animal by means of a milking robot means comprising a robot arm (28) having a longitudinal axis and a distal end and a tube guide means (30), which is mounted at said distal end, **characterised in that** a positioning means (2) is provided, the features of which being specified in one of claims 1-13.

15. A milking station according to claim 14, **characterised in that** the robot arm (28) is responsive to the signals of the positioning means (2) in order to cause the tube guide means (30) to follow said movements of the animal.

## Patentansprüche

1. Positioniereinrichtung (2) für eine Melkstation (1) zum Melken eines Milch gebenden Tiers mittels einer Robotereinrichtung (28), wobei die Positioniereinrichtung (2) eine Sensorvorrichtung (4) aufweist, die Signale erzeugt, die den Bewegungen des Tiers bezüglich der Melkstation (1) entsprechen, und wobei die Robotereinrichtung (28) auf die Signale reagiert, um den Bewegungen des Tiers zu folgen, **dadurch gekennzeichnet, dass** die Positioniereinrichtung (2) eine Krippenvorrichtung (6) aufweist, die mittels eines Transponder-Lesegeräts gesteuert wird und die von einer Ausgangsposition, in der keine Fütterung stattfindet, in eine von mindestens vier möglichen Fütterpositionen bewegbar ist, um das Tier zur Einnahme einer Fütterstellung anzuregen, in der sich das Euter an der richtigen Position zur Befestigung eines Zitzenbechers und zum Melken befindet.

2. Positioniereinrichtung nach Anspruch 1, **dadurch gekennzeichnet, dass** die Sensorvorrichtung (4) Signale erzeugt, die die Position eines optionalen Bereichs an dem Hinterviertel des Tiers anzeigen.

3. Positioniereinrichtung nach Anspruch 1, **dadurch gekennzeichnet, dass** die Sensorvorrichtung (4) Signale erzeugt, die die Position eines vorbestimmten Bereichs an dem Hinterviertel des Tiers anzeigen.

4. Positioniereinrichtung nach Anspruch 2 oder 3, **dadurch gekennzeichnet, dass** die Sensorvorrichtung (4) eine Dungplatte (16) aufweist, deren unteres Ende (20) schwenkbar an einem Rahmen (21) der Melkstation befestigt ist und deren oberes Ende (23) dazu bestimmt ist, an dem geeigneten Bereich des Hinterviertels anzuliegen, und einen Sensor (22, 22'), der die Bewegungen der Dungplatte relativ zu dem Rahmen anzeigt.

5. Positioniereinrichtung nach einem der vorangehenden Ansprüche, **dadurch gekennzeichnet, dass** jede der möglichen Fütterpositionen einem in einer spezifischen Tierkategorie klassifizierten Tier zugeordnet ist.

6. Positioniereinrichtung nach Anspruch 5, **dadurch gekennzeichnet, dass** jede spezifische Tierkategorie Tiere mit der im Wesentlichen selben Länge umfasst.

7. Positioniereinrichtung nach Anspruch 5, **dadurch gekennzeichnet, dass** die Tiere einer ersten Kategorie länger sind als die Tiere in einer zweiten Kategorie.

8. Positioniereinrichtung nach Anspruch 7, **dadurch gekennzeichnet, dass** die Tiere der zweiten Kategorie länger sind als die Tiere in einer dritten Kategorie.

9. Positioniereinrichtung nach Anspruch 8, **dadurch gekennzeichnet, dass** die Tiere der dritten Kategorie länger sind als die Tiere in einer vierten Kategorie.

10. Positioniereinrichtung nach einem der Ansprüche 4 bis 9, **dadurch gekennzeichnet, dass** der Sensor als Doppler-Radar-Typ Sensor (22') ausgebildet ist.

11. Positioniereinrichtung nach einem der Ansprüche 4 bis 9, **dadurch gekennzeichnet, dass** der Sensor als Geometrie-Typ Sensor (22) ausgebildet ist.

12. Positioniereinrichtung nach einem der Ansprüche 4 bis 9, **dadurch gekennzeichnet, dass** der Sensor als Winkelanzeiger (22) ausgebildet ist.

13. Positioniereinrichtung nach einem der Ansprüche 4 bis 9, **dadurch gekennzeichnet, dass** der Sensor als Laser-Typ Sensor (22') ausgebildet ist.

14. Melkstation (1) zum Melken von Milch gebenden Tieren mittels eines Melkroboters, mit einem Roboterarm (28), der eine Längsachse und ein distales Ende sowie eine an dem distalen Ende angeordnete Leitungsführungseinrichtung aufweist, **dadurch gekennzeichnet, dass** eine Positioniereinrichtung (2) vorgesehen ist, deren Merkmale in einem der Ansprüche 1 bis 13 angegeben sind.

15. Melkstation nach Anspruch 14, **dadurch gekennzeichnet, dass** der Roboterarm (28) auf die Signale der Positioniereinrichtung (2) reagiert, um zu bewirken, dass die Leitungsführungseinrichtung (30) den Bewegungen des Tiers folgt.

## Revendications

1. Moyen de positionnement (2) pour une station de traite (1) pour traire un animal en lactation à l'aide d'un moyen robotisé (28), ledit moyen de positionnement (2) étant muni d'un dispositif de détection (4), qui est adapté pour produire des signaux correspondant aux mouvements de l'animal par rapport à ladite station de traite (1), le moyen robotisé (28) réagissant auxdits signaux afin de suivre lesdits mouvements de l'animal, **caractérisé en ce que** le moyen de positionnement (2) comprend un dispositif à mangeoire (6), qui est commandé au moyen d'un lecteur de transpondeur, et est mobile d'une position de départ, dans laquelle l'alimentation ne peut avoir lieu, à une position parmi au moins quatre positions d'alimentation possibles pour encourager l'animal à rechercher une position d'alimentation, dans laquelle le pis est dans une position correcte pour la fixation de gobelets trayeurs et pour la traite.

2. Moyen de positionnement selon la revendication 1, **caractérisé en ce que** le dispositif de détection (4) est adapté pour produire des signaux qui indiquent la position d'une région facultative à l'arrière-train de l'animal.

3. Moyen de positionnement selon la revendication 1, **caractérisé en ce que** le dispositif de détection (4) est adapté pour produire des signaux qui indiquent la position d'une région prédéterminée à l'arrière-train de l'animal.

4. Moyen de positionnement selon la revendication 2 ou 3, **caractérisé en ce que** le dispositif de détection (4) comprend une plaque à fumier (16), dont une extrémité inférieure (20) est liée à pivotement à un cadre (21) de la station de traite, et dont une extrémité supérieure (23) est adaptée pour reposer contre la région appropriée de l'arrière-train de l'animal, un capteur (22, 22') étant placé pour indiquer les mouvements de la plaque à fumier par rapport audit cadre.

5. Moyen de positionnement selon l'une des revendications précédentes, **caractérisé en ce que** chacune des positions d'alimentation possibles correspond à des animaux classés dans une catégorie d'animaux spécifique.

6. Moyen de positionnement selon la revendication 5, **caractérisé en ce que** chaque catégorie d'animaux spécifique comprend des animaux ayant essentiellement la même longueur.

7. Moyen de positionnement selon la revendication 5, **caractérisé en ce que** les animaux d'une première catégorie sont plus longs que les animaux d'une deuxième catégorie.

8. Moyen de positionnement selon la revendication 7, **caractérisé en ce que** les animaux de la deuxième catégorie sont plus longs que les animaux d'une troisième catégorie.

9. Moyen de positionnement selon la revendication 8, **caractérisé en ce que** les animaux de la troisième catégorie sont plus longs que les animaux d'une quatrième catégorie.

10. Moyen de positionnement selon l'une des revendications 4 à 9, **caractérisé en ce que** le capteur est un capteur de type radar Doppler (22').

11. Moyen de positionnement selon l'une des revendications 4 à 9, **caractérisé en ce que** le capteur est un capteur de type géométrique (22).

12. Moyen de positionnement selon l'une des revendications 4 à 9, **caractérisé en ce que** le capteur est un indicateur d'angle (22).

13. Moyen de positionnement selon l'une des revendications 4 à 9, **caractérisé en ce que** le capteur est un capteur de type laser (22').

14. Station de traite (1) pour traire un animal en lactation à l'aide d'un moyen de traite robotisé comprenant un bras de robot (28) ayant un axe longitudinal et une extrémité distale et un moyen de guidage (30) de tubes, qui est monté sur ladite extrémité distale, **caractérisée en ce qu'**un moyen de positionnement (2) est prévu, dont les caractéristiques sont données dans l'une des revendications 1 à 13.

15. Station de traite selon la revendication 14, **caractérisée en ce que** le bras de robot (28) réagit aux signaux du moyen de positionnement (2) de telle manière que le moyen de guidage (30) de tubes suit lesdits mouvements de l'animal.
